# EUROPEAN PATENT APPLICATION

(11) **EP 4 002 518 A1**
(43) Date of publication of application: **25.05.2022**
(21) Application number: 21209319.9
(22) Date of filing: 19.11.2021
(51) Int. Cl.: H01M 4/133, H01M 4/134, H01M 4/1393, H01M 4/1395, H01M 4/36, H01M 4/38, H01M 4/62, H01M 10/0525, H01M 4/02, H01M 4/04

(54) **NEGATIVE ELECTRODE FOR RECHARGEABLE LITHIUM BATTERY AND RECHARGEABLE LITHIUM BATTERY INCLUDING SAME**

(30) Priority: 19.11.2020 KR 20200155918
(71) Applicant: Samsung SDI Co., Ltd., Yongin-si, Gyeonggi-do 17084 (KR)
(72) Inventor: BAE, Juhye, 17084 Yongin-si (KR); AHN, Won-Gi, 17084 Yongin-si (KR); LEE, Junhong, 17084 Yongin-si (KR); JEONG, Min-young, 17084 Yongin-si (KR)
(74) Representative: Shearman, James Ward

(57) **Abstract**

A negative electrode for a rechargeable lithium battery and a rechargeable lithium battery including the same are provided, and the negative electrode includes: a current collector; a first negative active material layer disposed on one side of the current collector and including a first negative active material and a linear conductive material; and a second negative active material layer disposed on one side of the first negative active material layer and including a second negative active material.

## Description

### BACKGROUND OF THE INVENTION

### (a) Field of the Invention

It relates to a negative electrode for a rechargeable lithium battery and a rechargeable lithium battery including the same.

### (b) Description of the Related Art

Recently, with the rapid spread of electronic devices, using batteries, such as mobile phones, notebook computers, and electric vehicles, the demand for small, lightweight, and relatively high-capacity rechargeable lithium batteries is rapidly increasing. A rechargeable lithium battery has recently drawn attention as a driving power source for portable devices, as it has lighter weight and high energy density. Accordingly, researches for improving performances of rechargeable lithium batteries are actively studied.

A rechargeable lithium battery includes a positive electrode and a negative electrode which includes an active material being capable of intercalating and deintercalating lithium ions, and an electrolyte, and generates electrical energy due to the oxidation and reduction reaction when lithium ions are intercalated and deintercalated into the positive electrode and the negative electrode.

As for a positive active material of a rechargeable lithium battery, transition metal compounds such as lithium cobalt oxides, lithium nickel oxides, lithium manganese oxides are mainly used. As a negative active material, crystalline carbon such as natural graphite, artificial graphite, or amorphous carbon is used, or silicon-based active materials are used.

Recently, a negative active material layer is thickly prepared in order to improve energy density of a rechargeable lithium battery, and in particular, a negative active material layer using a two layer silicon-based active material has been attempted. However, in this case, breakage of the negative electrode structure due to a volume expansion and construction of the silicon-based active material may occur during charging and discharging.

The above information disclosed in this Background section is only for enhancement of understanding of the background of the invention, and therefore it may contain information that does not form the prior art that is already known to a person of ordinary skill in the art.

### SUMMARY OF THE INVENTION

One embodiment provides a negative electrode for a rechargeable lithium battery exhibiting excellent high rate characteristics and cycle-life characteristics.

Another embodiment provides a rechargeable lithium battery including the negative electrode.

One embodiment provides a negative electrode including: a current collector; a first negative active material layer disposed on the current collector (e.g. disposed on one side of the current collector) and including a first negative active material and a linear conductive material; and a second negative active material layer disposed on one side of the first negative active material layer and including a second negative active material.

The linear conductive material may be carbon nanotubes, carbon fiber, carbon nanofiber, or a combination thereof.

The second negative active material layer may further include a dot-type conductive material.

The dot-type conductive material may be carbon black, denka black, ketjen black, acetylene black, crystalline carbon, or a combination thereof.

The first negative active material or the second negative active material may be a Si-carbon composite, graphite, or a combination thereof. Furthermore, the first negative active material or the second negative active material may further include crystalline carbon.

A thickness of the second negative active material layer may be about 1% to about 75% based on the total thickness of the first negative active material layer and the second negative active material layer.

Another embodiment provides a rechargeable lithium battery including the negative electrode, a positive electrode, and an electrolyte.

At least some of the above and other features of the invention are set out in the claims.

The negative active material according to one embodiment may exhibit excellent high-rate characteristics and cycle-life characteristics.

### BRIEF DESCRIPTION OF THE DRAWINGS

FIG. 1 is a schematic view showing the structure of a negative electrode for a rechargeable lithium battery according to an embodiment.
FIG. 2 is a schematic view showing the structure of a rechargeable lithium battery according to an embodiment.
FIGs. 3A and 3B are SEM photographs for the first negative active material layer according to Example 1.
FIG. 4 is a SEM photograph for the second negative active material layer according to Example 1.
FIGs. 5A and 5B are SEM photographs for the first negative active material layer according to Comparative Example 1.
FIG. 6 is a graph showing discharge capacity at each discharging rate of the half-cells of Example 1 and Comparative Example 1.
FIG. 7 is a graph showing charge capacity at each charging rate of the half-cells of Example 1 and Comparative Example 1.
FIG. 8 is a graph showing retention obtained after charging and discharging under the charging and discharging conditions of FIG. 7.

### DETAILED DESCRIPTION OF THE INVENTION

Hereinafter, embodiments are described in detail. However, these embodiments are just examples, and the present invention is not limited thereto and the present invention is defined by the scope of claims.

A negative electrode for a rechargeable lithium battery according to one embodiment includes a current collector; a first negative active material layer disposed on the current collector; and a second negative active material layer disposed on the first negative active material layer.

The first negative active material layer includes a first negative active material and a linear conductive material, and the second negative active material layer includes a second negative active material. Furthermore, the second negative active material layer may further include a dot-type conductive material.

As such, when the linear conductive material is used in the first negative active material layer contacted with the current collector, the volume expansion of the negative electrode may be effectively suppressed during charging and discharge. In particular, such effects may be further improved when the second negative active material layer which is an upper layer contacted with a separator may further include the dot-type conductive material.

Such volume expansion suppression may be obtained as the linear conductive material positioned on the lower layer acts as a matrix to hold the negative active material. In addition, a structure of the negative active material may be well maintained during charge and discharge and thus, long cycle-life may be exhibited.

Furthermore, the linear conductive material may increase a distance of moving electrons to allow all negative active material positioned on the lower portion of the negative active material layer to participate in charge and discharge, and thus, the high-rate charge and discharge performances may be improved.

The dot-type conductive material may be contacted with the negative active material with a large area in the negative active material layer, and thus, high-rate characteristic may be improved.

Such effects using the linear conductive material in the lower portion and using the linear conductive material with the dot-type conductive material may not be sufficiently obtained, if the linear conductive material and the dot-type conductive material are mixed to use in one layer. That is, the respective effects from the dot-type conductive material and the linear conductive material may not be sufficiently obtained when the linear conductive material is used together with the dot-type conductive material in one layer. Furthermore, if the linear conductive material is used in the second negative active material layer which is the upper layer contacted with the separator, and the dot-type conductive material is used in the first negative active material layer which is the lower layer contacted with the current collector, the volume expansion of the negative active material layer may extremely occur during charge and discharge, and the dot-type conductive material may not sufficiently act as a conductive material imparting conductivity between the active materials.

The linear conductive material may be carbon nanotubes, carbon fiber, carbon nanofiber, or a combination thereof. The carbon nanotubes may be single-walled carbon nanotubes, double-walled carbon nanotubes, multi-walled carbon nanotubes, or a combination thereof.

In the specification, an average length or width of the linear conductive material may be obtained by forming a solution of the linear conductive material with a determined concentration, preparing a film using the solution and measuring the average length or width via a SEM photograph. Furthermore, the width may be also an average width.

The linear conductive material may have an average length of about 30 µm to about 100 µm, about 30 µm to about 80 µm, or about 30 µm to about 50 µm. The linear conductive material may have a width of about 10 nm to about 40 nm, about 10 nm to about 30 nm, or about 10 nm to about 20 nm. The average length of the linear conductive material does not mean only a complete straight line length and may be a distance corresponding to a long axis of the linear conductive material in the negative active material layer. When the linear conductive material having the average length and width is used, the linear conductive material may easily contact the negative active material.

The dot-type conductive material may be carbon black, denka black, ketjen black, acetylene black, crystalline carbon, or a combination thereof. The crystalline carbon may be artificial graphite, natural graphite, or a combination thereof. A particle diameter of the dot-type conductive material may be about 1 nm to about 100 nm, about 10 nm to about 80 nm, or about 20 nm to about 60 nm.

The first negative active material may be same as or different from the second negative active material, and may be a Si-carbon composite, graphite, or a combination thereof. According to one embodiment, when the negative active material includes the Si-carbon composite, the advantageous use of the linear conductive material in the first negative active material layer and the dot-type conductive material in the second negative active material layer may be effectively obtained. This is because the volume expansion of the Si-carbon composite is larger than that of crystalline carbon during charge and discharge.

The Si-carbon composite may include a composite including Si particles and a first carbon-based material. The first carbon-based material may be amorphous carbon or crystalline carbon. For example, the composite may include a core in which Si particles are mixed with a second carbon-based material, and a third carbon-based material surrounding the core. The second carbon-based material and the third carbon-based material may be the same as or different from each other, and may be amorphous carbon or crystalline carbon.

The amorphous carbon may be pitch carbon, soft carbon, hard carbon, mesophase pitch carbide, sintered coke, carbon fiber, or a combination thereof, and the crystalline carbon may be artificial graphite, natural graphite, or a combination thereof.

A particle diameter of the Si particle may be about 10 nm to about 30 µm, and according to one embodiment, about 10 nm to about 1000 nm, and according to another embodiment, about 20 nm to about 150 nm. When the particle diameter of the Si particle is within the range, the volume expansion caused during charge and discharge may be suppressed, and breakage of the conductive path due to crushing of particles may be prevented.

In the specification, the particle diameter may be an average particle diameter of particles. Herein, the average particle diameter may indicate a particle diameter (D50) which is measured as a cumulative volume. As used herein, when a definition is not otherwise provided in the specification, such a particle diameter (D50) indicates a particle diameter where a cumulative volume is about 50 volume% in a particle distribution.

The average particle size (D50) may be measured by a method that is well known to those skilled in the art, for example, by a particle size analyzer, or by a transmission electron microscopic image or a scanning electron microscopic image. Alternatively, a dynamic light-scattering measurement device is used to perform a data analysis, and the number of particles is counted for each particle size range. From this, the average particle diameter (D50) value may be easily obtained through calculation.

When the Si-carbon composite includes the Si particle and the first carbon-based material, an amount of the Si particle may be about 30 wt% to about 70 wt%, and according to one embodiment, about 40 wt% to about 50 wt%. An amount of the first carbon-based material may be about 70 wt% to about 30 wt%, and according to one embodiment, about 60 wt% to about 50 wt%. When the amounts of the Si particles and the first carbon-based material fall in the range, high-capacity characteristics may be exhibited.

If the Si-carbon composite includes a core in which Si particles and a second carbon-based material are mixed and a third carbon-based material surrounded on the core, the third carbon-based material may be presented in a thickness of about 5nm to about 100nm. Furthermore, an amount of the third carbon-based material may be about 1 wt% to about 50 wt% based on the total weight of the Si-carbon composite, an amount of the Si particle may be about 30 wt% to about 70 wt% based on the total weight of the Si-carbon composite, and an amount of the second carbon-based material may be about 20 wt% to about 69 wt% based on the total weight of the Si-carbon composite. In the case of satisfying the amounts of the Si particle, the third carbon-based material and the second carbon-based material in the range, the discharge capacity may be excellent and capacity retention may be improved.

In one embodiment, the first negative active material or the second negative active material may further include crystalline carbon. The crystalline carbon may be artificial graphite, natural graphite, or a combination thereof.

If the first negative active material or the second negative active material further includes crystalline carbon, a mixing ratio of crystalline carbon and the Si-carbon composite may be about 1:1 to about 20:1 by weight ratio, about 1:1 to about 19:1 by weight ratio, or about 1.5:1 to about 19:1 by weight ratio. When the mixing ratio of crystalline carbon and the Si-carbon composite is within the range, the volume expansion of the negative active material may be effectively suppressed and the conductivity may be further improved.

In one embodiment, a thickness of the second negative active material layer may be about 1% to about 75% based on the total thickness of the first negative active material layer and the second negative active material layer. When the thickness of the second negative active material layer is within the range, the linear conductive material is presented between the active materials or between the active material and the current collector to link to each other, that is, may well control a contact area with each other, and thus the electron transferring may be further improved.

In the first negative active material layer, an amount of the linear conductive material may be about 0.1 wt% to about 5 wt%, about 0.1 wt% to about 3 wt%, or about 0.1 wt% to about 2 wt% based on the total 100 wt% of the first negative active material layer.

Furthermore, if the second negative active material layer further includes the dot-type conductive material, an amount of the dot-type conductive material may be about 0.5 wt% to about 5 wt%, about 0.5 wt% to about 3 wt%, or about 0.5 wt% to about 2 wt% based on the total 100 wt% of the second negative active material layer.

When the amounts of the linear conductive material and the dot-type conductive material respectively fall in the range, the effects of using the linear conductive material and the dot-type conductive material may be more increased.

In one embodiment, when the first negative active material layer includes the linear conductive material and the second negative active material layer includes the dot-type conductive material, an amount of the linear conductive material may be about 20 wt% to about 50 wt% based on the total of 100 wt% of the linear conductive material and the dot-type conductive material included in the negative electrode. As such, even though the linear conductive material is used in an amount of at least 20 wt%, the structure of the negative active material layer may be well maintained so that the volume expansion during charge and discharge may be effectively prevented to improve the battery performance. In addition, the linear conductive material may be maximally used with the same amount with the dot-type conductive material, and herein, the effect related to high rate characteristics using the linear conductive material may be further improved.

In the first negative active material layer, an amount of the first negative active material may be about 95 wt% to about 99.5 wt% based on a total 100 wt% of the first negative active material layer. In the second negative active material layer, an amount of the second negative active material may be about 95 wt% to about 99.5 wt% based on a total of 100 wt% of the second negative active material layer.

Furthermore, the first negative active material layer may further include a binder. When the first negative active material layer further includes the binder, it may include about 94 wt% to about 98.5 wt% of the first negative active material, about 0.5 wt% to 5 wt% of the conductive material (linear conductive material), and about 1 wt% to about 5.5 wt% of the binder based on the total weight of the first negative active material layer.

The second negative active material layer may further include a binder. When the second negative active material layer further includes the binder, it may include about 94 wt% to about 98.5 wt% of the second negative active material, about 0.5 wt% to 5 wt% of the conductive material (dot-type conductive material), and about 1 wt% to about 5.5 wt% of the binder based on the total weight of the second negative active material layer.

The binder improves binding properties of negative active material particles with one another and with a current collector. The binder includes a non-aqueous binder, an aqueous binder, or a combination thereof.

The non-aqueous binder may be an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The aqueous binder may be a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinyl pyrrolidone, polypropylene, polyepichlorohydrin, polyphosphazene, an ethylene propylene copolymer, polyvinylpyridine, chlorosulfonated polyethylene, latex, a polyester resin, an acrylic resin, a phenolic resin, an epoxy resin, polyvinyl alcohol, or a combination thereof.

When the negative electrode binder is an aqueous binder, a cellulose-based compound may be further used to provide viscosity. The cellulose-based compound includes one or more of carboxymethyl cellulose, hydroxypropyl methylcellulose, methyl cellulose, or alkali metal salts thereof. The alkali metals may be Na, K, or Li. Such a thickener may be included in an amount of about 0.1 parts by weight to about 3 parts by weight based on 100 parts by weight of the negative active material.

The current collector may include one selected from a copper foil, a nickel foil, a stainless steel foil, a titanium foil, a nickel foam, a copper foam, a polymer substrate coated with a conductive metal, and a combination thereof.

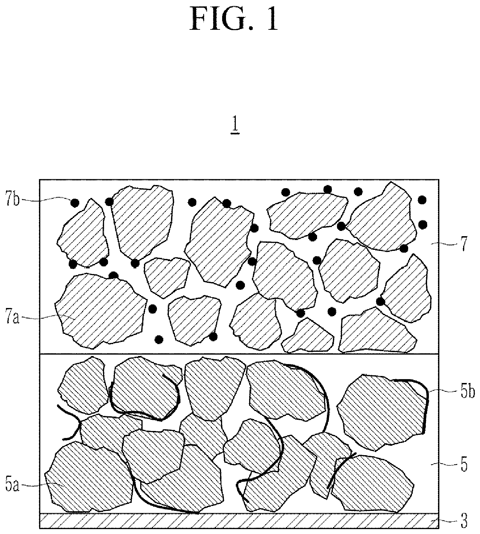

When the negative electrode is illustrated with reference of FIG. 1, the negative electrode 1 according to one embodiment includes the current collector 3, the first negative active material layer 5, and the second negative active material layer 7. The first negative active material layer 5 includes a first negative active material 5a and a linear conductive material 5b, and the second negative active material layer 7 includes a second negative active material 7a and a dot-type conductive material 7b.

Another embodiment provides a rechargeable lithium battery including the negative electrode, a positive electrode; and an electrolyte.

The positive electrode may include a current collector and a positive active material layer formed on the current collector.

The positive active material may include lithiated intercalation compounds that reversibly intercalate and deintercalate lithium ions. Specifically, one or more composite oxides of a metal selected from cobalt, manganese, nickel, and a combination thereof, and lithium may be used. More specifically, the compounds represented by one of the following chemical formulae may be used. LiₐA_{1-b}X_{b}D₂ (0.90 ≤ a ≤1.8, 0 ≤ b ≤ 0.5); LiₐA_{1-b}X_{b}O_{2-c}D_{c} (0.90 ≤ a ≤ 1.8, 0 ≤ b ≤ 0.5, 0 ≤ c ≤ 0.05); LiₐE_{1-b}X_{b}O_{2-c}D_{c} (0.90 ≤ a ≤ 1.8, 0 ≤ b ≤ 0.5, 0 ≤ c ≤ 0.05); LiₐE_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}D_{α} (0.90 ≤ a ≤ 1.8, 0 ≤ b ≤ 0.5, 0 ≤ c ≤ 0.5, 0 < α ≤ 2); LiₐNi_{1-b-c}Co_{b}X_{c}O_{2-α}T_{α} (0.90 ≤ a ≤ 1.8, 0 ≤ b ≤ 0.5, 0 ≤ c ≤0.5, 0 < α < 2); LiₐNi_{1-b-c}Co_{b}X_{c}O_{2-α}T₂ (0.90 ≤ a ≤ 1.8, 0 ≤ b ≤ 0.5, 0 ≤ c ≤0.5, 0 < α < 2); LiₐNi_{1-b-c}Mn_{b}X_{c}D_{α} (0.90 ≤a ≤1.8, 0 ≤ b ≤ 0.5, 0 ≤ c ≤ 0.5, 0 < α ≤ 2); LiₐNi_{1-b-c}Mn_{b}X_{c}O_{2-α}T_{α} (0.90 ≤ a ≤ 1.8, 0 ≤ b ≤ 0.5, 0 ≤ c ≤ 0.05, 0 < α < 2); LiₐNi_{1-b-c}Mn_{b}X_{c}O_{2-α}T₂ (0.90 ≤ a ≤ 1.8, 0 ≤ b ≤ 0.5, 0 ≤ c ≤ 0.5, 0 < α < 2); LiₐNi_{b}E_{c}G_{d}O₂ (0.90 ≤ a ≤ 1.8, 0 ≤ b ≤ 0.9, 0 ≤ c ≤0.5, 0.001 ≤ d ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Al_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNi_{b}Co_{c}Mn_{d}GₑO₂ (0.90 ≤ a ≤ 1.8, 0 ≤ b ≤ 0.9, 0 ≤ c ≤ 0.5, 0 ≤ d ≤ 0.5, 0.001 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤1.8, 0.001 ≤ b ≤ 0.1); LiₐMn_{1-g}G_{g}PO₄ (0.90 ≤ a ≤ 1.8, 0 ≤ g ≤ 0.5); QO₂; QS₂; LiQS₂; V₂O₅; LiV₂O₅; LiZO₂; LiNiVO₄; Li _{(3-f)}J₂(PO₄)₃ (0 ≤ f ≤ 2); Li _{(3-f)}Fe₂(PO₄)₃ (0 ≤ f ≤ 2); LiₐFePO₄ (0.90 ≤ a≤ 1.8)

In the above chemical formulae, A is selected from Ni, Co, Mn, and a combination thereof; X is selected from Al, Ni, Co, Mn, Cr, Fe, Mg, Sr, V, a rare earth element, and a combination thereof; D is selected from O, F, S, P, and a combination thereof; E is selected from Co, Mn, and a combination thereof; T is selected from F, S, P, and a combination thereof; G is selected from Al, Cr, Mn, Fe, Mg, La, Ce, Sr, V, and a combination thereof; Q is selected from Ti, Mo, Mn, and a combination thereof; Z is selected from Cr, V, Fe, Sc, Y, and a combination thereof; and J is selected from V, Cr, Mn, Co, Ni, Cu, and a combination thereof.

The compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, or a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive active material by using these elements in the compound. For example, the method may include any coating method such as spray coating, dipping, and the like, but is not illustrated in more detail since it is well-known in the related field.

In the positive electrode, an amount of the positive active material may be about 90 wt% to about 98 wt% based on the total weight of the positive active material layer.

In an embodiment, the positive active material layer may further include a binder and a conductive material. Herein, the binder and the conductive material may be included in an amount of about 1 wt% to about 5 wt%, respectively based on the total amount of the positive active material layer.

The binder improves binding properties of positive active material particles with one another and with a current collector. Examples thereof may be polyvinyl alcohol, carboxymethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene butadiene rubber, an acrylated styrene butadiene rubber, an epoxy resin, nylon, and the like, but are not limited thereto.

The conductive material is included to provide electrode conductivity. Any electrically conductive material may be used as a conductive material unless it causes a chemical change. Examples of the conductive material may include a carbon-based material such as natural graphite, artificial graphite, carbon black, acetylene black, ketjen black, a carbon fiber and the like; a metal-based material of a metal powder or a metal fiber including copper, nickel, aluminium, silver, and the like; a conductive polymer such as a polyphenylene derivative; or a mixture thereof.

The current collector may use Al, but is not limited thereto.

The electrolyte includes a non-aqueous organic solvent and a lithium salt.

The non-aqueous organic solvent serves as a medium for transmitting ions taking part in the electrochemical reaction of a battery.

The non-aqueous organic solvent may include a carbonate-based, ester-based, ether-based, ketone-based, alcohol-based, or aprotic solvent.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include methyl acetate, ethyl acetate, n-propyl acetate, dimethyl acetate, methyl propionate, ethyl propionate, decanolide, mevalonolactone, caprolactone, and the like. The ether-based solvent may include dibutyl ether, tetraglyme, diglyme, dimethoxyethane, 2-methyltetrahydrofuran, tetrahydrofuran, and the like. The ketone-based solvent includes cyclohexanone, and the like. The alcohol-based solvent includes ethyl alcohol, isopropyl alcohol, and the like, and examples of the aprotic solvent include nitriles such as R-CN (where R is a C2 to C20 linear, branched, or cyclic hydrocarbon, or may include a double bond, an aromatic ring, or an ether bond), amides such as dimethylformamide, dioxolanes such as 1,3-dioxolane, sulfolanes, and the like.

The organic solvent may be used alone or in a mixture. When the organic solvent is used in a mixture, the mixture ratio may be controlled in accordance with a desirable battery performance.

The carbonate-based solvent may include a mixture with a cyclic carbonate and a linear carbonate. The cyclic carbonate and linear carbonate are mixed together in a volume ratio of about 1:1 to about 1:9. When the mixture is used as an electrolyte, it may have enhanced performance.

The organic solvent may further include an aromatic hydrocarbon-based solvent as well as the carbonate-based solvent. The carbonate-based solvent and aromatic hydrocarbon-based solvent may be mixed together in a volume ratio of about 1:1 to about 30:1.

The aromatic hydrocarbon-based organic solvent may be an aromatic hydrocarbon-based compound represented by Chemical Formula 1.

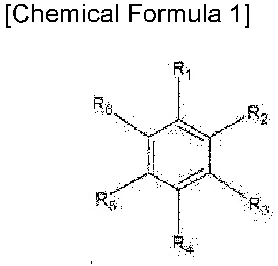

In Chemical Formula 1, R₁ to R₆ are the same or different and are selected from hydrogen, a halogen, a C1 to C10 alkyl group, a haloalkyl group, and a combination thereof.

Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include vinylene carbonate, an ethylene carbonate-based compound represented by Chemical Formula 2, or propane sultone as an additive for improving cycle life.

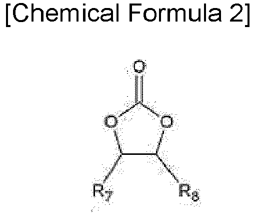

In Chemical Formula 2, R₇ and R₈ are the same or different and may each independently be hydrogen, a halogen, a cyano group (CN), a nitro group (NO₂), or a C1 to C5 fluoroalkyl group, provided that at least one of R₇ and R₈ is a halogen, a cyano group (CN), a nitro group (NO₂), or a C1 to C5 fluoroalkyl group, and R₇ and R₈ are not simultaneously hydrogen.

Examples of the ethylene carbonate-based compound may be difluoroethylene carbonate, chloroethylene carbonate, dichloroethylene carbonate, bromoethylene carbonate, dibromoethylene carbonate, nitroethylene carbonate, cyanoethylene carbonate, or fluoroethylene carbonate. An amount of the additive for improving the cycle-life characteristics may be used within an appropriate range.

The lithium salt dissolved in an organic solvent supplies a battery with lithium ions, basically operates the rechargeable lithium battery, and improves transportation of the lithium ions between a positive electrode and a negative electrode. Examples of the lithium salt include at least one supporting salt selected from LiPF₆, LiBF₄, LiSbF₆, LiAsF₆, LiN(SO₂C₂F₅)₂, Li(CF₃SO₂)₂N, LiN (SO₃C₂F₅)₂, Li(FSO₂)₂N(lithium bis(fluorosulfonyl)imide: LiFSI), LiC₄F₉SO₃, LiClO₄, LiAlO₂, LiAlCl₄, LiPO₂F₂, LiN (CₓF₂ₓ₊₁SO₂, C_{y}F_{2y+1}SO₂), wherein, x and y are natural numbers, for example an integer ranging from 1 to 20, lithium difluoro(bisoxolato) phosphate), LiCl, Lil, LiB(C₂O₄)₂(lithium bis(oxalato) borate: LiBOB) and lithium difluoro(oxalato)borate (LiDFOB). A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

A separator may be disposed between the positive electrode and the negative electrode depending on a type of a rechargeable lithium battery. The separator may use polyethylene, polypropylene, polyvinylidene fluoride or multilayers thereof having two or more layers and may be a mixed multilayer such as a polyethylene/polypropylene double-layered separator, a polyethylene/polypropylene/polyethylene triple-layered separator, a polypropylene/polyethylene/polypropylene triple-layered separator, and the like.

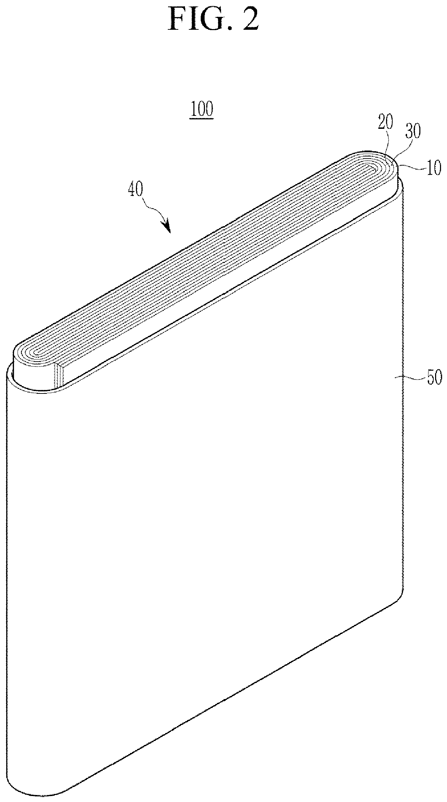

FIG. 2 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, and the like.

Referring to FIG. 2, a rechargeable lithium battery 100 according to an embodiment may include an electrode assembly 40 manufactured by winding a separator 30 disposed between a positive electrode 10 and a negative electrode 20 and a case 50 housing the electrode assembly 40. An electrolyte (not shown) may be impregnated in the positive electrode 10, the negative electrode 20, and the separator 30.

Hereinafter, examples of the present invention and comparative examples are described. These examples, however, are not in any sense to be interpreted as limiting the scope of the invention.

### Example 1

97.1 wt% of a graphite and Si-carbon composite as a negative active material (graphite at 86 wt%, Si-carbon composite at 14 wt%), 0.3 wt% of carbon nanotubes (average length: 30 µm to 50 µm, width: 10 nm to 20 nm) as a linear conductive material, 0.9 wt% of carboxymethyl cellulose, and 1.7 wt% of styrene-butadiene rubber were mixed in water to prepare a first negative active material layer slurry. Herein, the Si-carbon composite used a Si-carbon composite which included a core including artificial graphite and silicon particles and a soft carbon coating layer coated on the core. The soft carbon coating layer had a thickness of 20 nm and the silicon particles had an average a particle diameter D50 of 100 nm.

96.4 wt% of a graphite negative active material, 1.0 wt% of a denka black (average a particle diameter: 30 nm to 40 nm) as a dot-type conductive material, 0.9 wt% of carboxymethyl cellulose, and 1.7 wt% of styrene-butadiene rubber were mixed in water to prepare a second negative active material layer slurry.

The first negative active material layer slurry and the second negative active material layer slurry were simultaneously coated on a copper foil current collector and dried. The coating process was performed in order to directly coat the first negative active material layer slurry on the copper foil current collector.

Thereafter, the obtained product was compressed to prepare a negative electrode in which a first negative active material layer with a 54 µm thickness and a second negative active material layer with a 44 µm thickness were formed.

### Comparative Example 1

96.4 wt% of a graphite and Si-carbon composite as a negative active material (graphite at 86 wt%, Si-carbon composite at 14 wt%), 1.0 wt% of denka black (average particle diameter: 30 nm to 40 nm) as a dot-type conductive material, 0.9 wt% of carboxymethyl cellulose, and 1.7 wt% of styrene-butadiene rubber were mixed in water to prepare a first negative active material layer slurry. Herein, the Si-carbon composite used a Si-carbon composite which included a core including artificial graphite and silicon particles and a soft carbon coating layer coated on the core. The soft carbon coating layer had a thickness of 20 nm and the silicon particle had an average a particle diameter D50 of 100 nm.

With the same composition as the first negative active material layer slurry, 96.4 wt% of a graphite negative active material, 1.0 wt% of a denka black (average a particle diameter: 30 nm to 40 nm) as a dot-type conductive material, 0.9 wt% of carboxymethyl cellulose, and 1.7 wt% of styrene-butadiene rubber were mixed in water to prepare a second negative active material layer slurry.

The first negative active material layer slurry and the second negative active material layer slurry were simultaneously coated on a copper foil current collector and dried. The coating process was performed in order to directly coat the first negative active material layer slurry on the copper foil current collector.

Thereafter, the obtained product was compressed to prepare a negative electrode in which a first negative active material layer with a 49 µm thickness and a second negative active material layer with a 49 µm thickness were formed.

### Comparative Example 2

97.1 wt% of a graphite and Si-carbon composite as a negative active material (graphite at 86 wt%, Si-carbon composite at 14 wt%), 0.3 wt% of carbon nanotubes (average length: 30 *µ*m to 50 *µ*m, width: 10 nm to 20 nm) as a linear conductive material, 0.9 wt% of carboxymethyl cellulose, and 1.7 wt% of styrene-butadiene rubber were mixed in water to prepare a first negative active material layer slurry. Herein, the Si-carbon composite used a Si-carbon composite which included a core including artificial graphite and silicon particles and a soft carbon coating layer coated on the core. The soft carbon coating layer had a thickness of 20 nm and the silicon particles had an average particle diameter D50 of 100 nm.

97.1 wt% of a graphite and Si-carbon composite as a negative active material (graphite at 86 wt%, Si-carbon composite at 14 wt%), 0.3 wt% of carbon nanotubes (average length: 30 *µ*m to 40 *µ*m, width: 10 nm to 20 nm) as a linear conductive material, 0.9 wt% of carboxymethyl cellulose, and 1.7 wt% of styrene-butadiene rubber were mixed in water to prepare a second negative active material layer slurry.

The first negative active material layer slurry and the second negative active material layer slurry were simultaneously coated on a copper foil current collector and dried. The coating process was performed in order to directly coat the first negative active material layer slurry on the copper foil current collector.

Thereafter, the obtained product was compressed to prepare a negative electrode in which a first negative active material layer with a 49 µm thickness and a second negative active material layer with a 49 µm thickness were formed.

### Comparative Example 3

96.4 wt% of a graphite and Si-carbon composite as a negative active material (graphite at 86 wt%, Si-carbon composite at 14 wt%), 1.0 wt% of denka black (average particle diameter: 30 nm to 40 nm)) as a dot-type conductive material, 0.9 wt% of carboxymethyl cellulose, and 1.7 wt% of styrene-butadiene rubber were mixed in water to prepare a first negative active material layer slurry. Herein, the Si-carbon composite used a Si-carbon composite which included a core including artificial graphite and silicon particles and a soft carbon coating layer coated on the core. The soft carbon coating layer had a thickness of 20 nm and the silicon particle had an average a particle diameter D50 of 100 nm.

97.1 wt% of a graphite and Si-carbon composite as a negative active material (graphite at 86 wt%, Si-carbon composite at 14 wt%), 0.3 wt% of carbon nanotubes (average length: 30 *µ*m to 50 *µ*m, width: 10 nm to 20 nm) as a linear conductive material, 0.9 wt% of carboxymethyl cellulose, and 1.7 wt% of styrene-butadiene rubber were mixed in water to prepare a second negative active material layer slurry.

The first negative active material layer slurry and the second negative active material layer slurry were simultaneously coated on a copper foil current collector and dried. The coating process was performed in order to directly coat the first negative active material layer slurry on the copper foil current collector.

Thereafter, the obtained product was compressed to prepare a negative electrode in which a first negative active material layer with a 49 µm thickness and a second negative active material layer with a 49 µm thickness were formed.

### Experimental Example 1) SEM Measurement

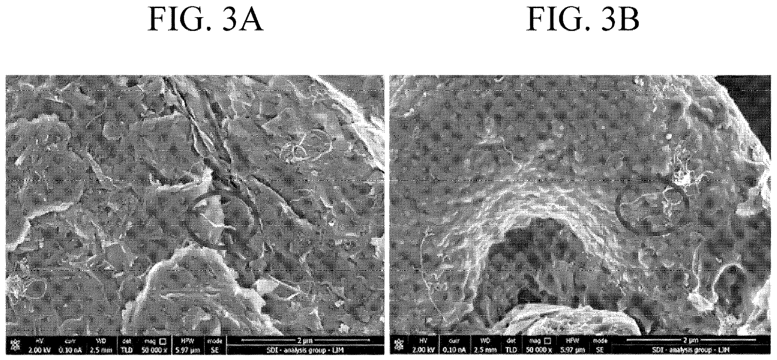

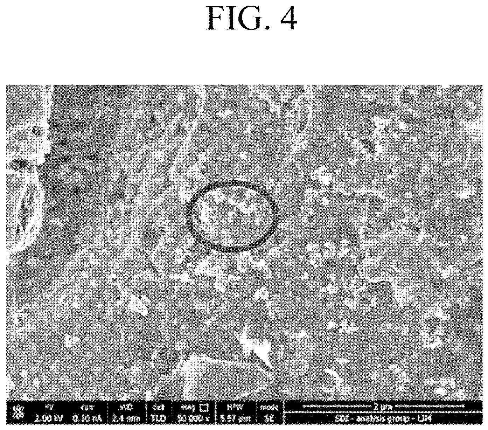

Regarding the negative electrode according to Example 1, a SEM photograph of the side of the negative active material layer was measured. The SEM photograph of the first negative active material layer is shown in FIGs. 3A and 3B, and the SEM photograph of the second negative active material layer is shown in FIG. 4.

FIG. 3A is an area of artificial graphite and FIG. 3B is an area of the Si-carbon composite, so that it can be clearly seen that the linear conductive material are both presented. Furthermore, it can be clearly shown from FIG. 4 that the dot-type conductive material was present in the second negative active material layer.

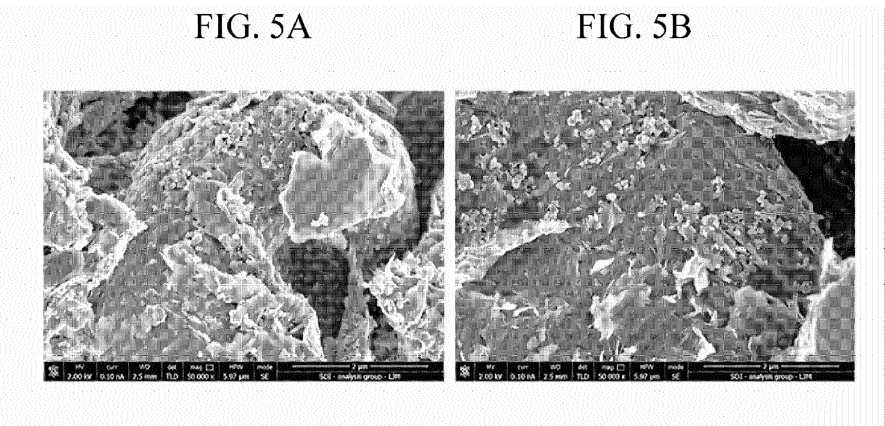

In addition, the SEM photograph of the negative electrode of Comparative Example 1 is shown in FIGs. 5A and 5B. As shown in FIGs. 5A and 5B, the dot-type conductive material was distributed in the Si-carbon composite and the artificial graphite in Comparative Example 1.

### Experimental Example 2) Rate capability measurement

### * Fabrication of a half-cell

Using the negative electrodes of Example 1 and Comparative Example 1, a lithium metal counter electrode and an electrolyte, a half-cell was fabricated.

As the electrolyte, a mixed solvent of ethylene carbonate and diethyl carbonate (50:50 volume ratio) in which 1 M LiPF₆ was dissolved was used.

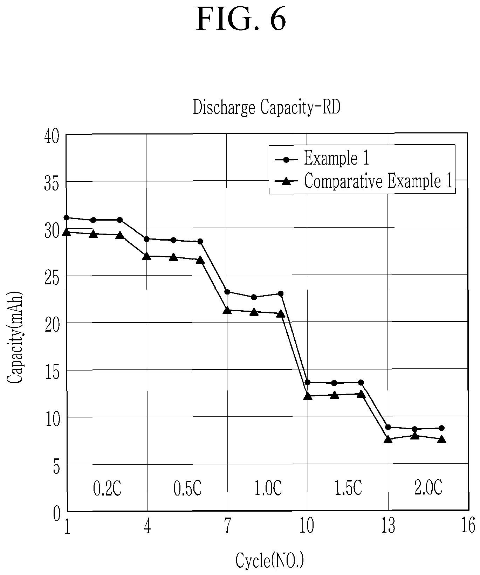

The charge and discharge by charging the half-cell at 0.2C to 4.25 V and discharging at 0.2C to 2.8 V four times, the charge and discharge by charging at 0.2C to 4.25 V and discharging at 0.5C to 2.8 V three times, the charge and discharge by charging at 0.2C to 4.25 V and discharging at 1.0C to 2.8 V three times, the charge and discharge by charging at 0.2C to 4.25 V and discharging at 1.5C to 2.8 V three times and the charge and discharge by charging at 0.2C to 4.25 V and discharging at 2.0C to 2.8 V two times were performed. Furthermore, after charging at each C-rate, the charging to 0.05C under a constant voltage (CV) was performed. The discharge capacities at each C-rate were measured and the results are shown in FIG. 6.

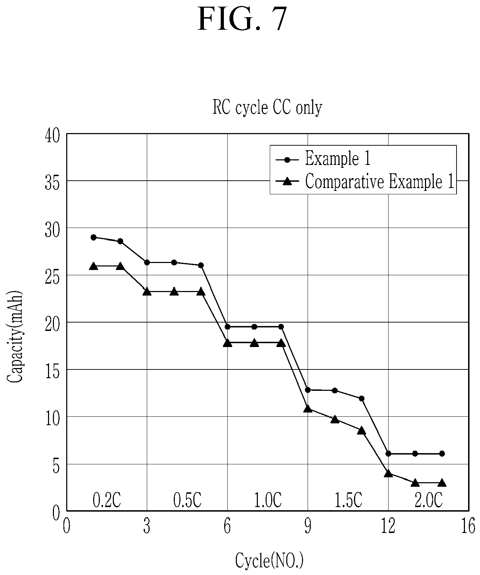

The charge and discharge by charging the half-cell at 0.2C to 4.25V and discharging at 0.2C four times, the charge and discharge by charging at 0.5C to 4.25 V and discharging at 0.2C three times, the charge and discharge by charging at 1C to 4.25 V and discharging at 0.2C three times, the charge and discharge by charging at 1.5C to 4.25 V and discharging at 0.2C three times, and the charge and discharge by charging at 2C to 4.25 V and discharging at 0.2C two times were performed. Furthermore, after charging at each C-rate, the charging to 0.05C under the constant voltage (CV) was performed. The charge capacities at each C-rate were measured and the results are shown in FIG. 7.

As shown in FIG. 6 and FIG. 7, the rate capability of the cell including the negative electrode according to Example 1 was higher than in Comparative Example 1, and particularly, it exhibited an excellent high rate charge characteristic.

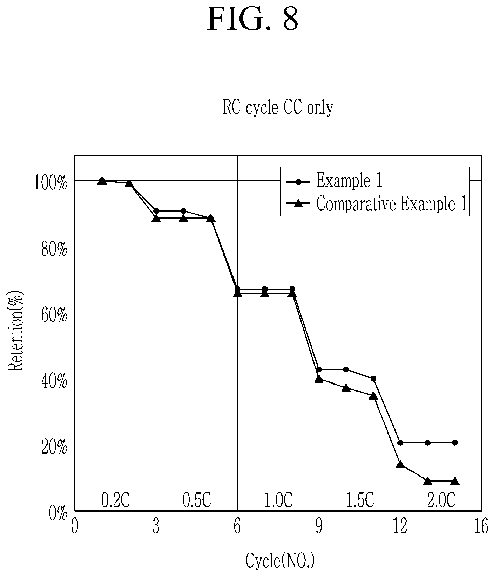

While the charge and the discharge were performed under the conditions of FIG. 7, the ratio of the final charge capacity to the first charge capacity at each C-rate was determined. The results are shown in FIG. 8, as a retention. As shown in FIG. 8, the charge capacity retention of the cell including the negative electrode of Example 1 was excellent compared to Comparative Example 1, at high rates of 1.0C or more.

While this invention has been described in connection with what is presently considered to be practical example embodiments, it is to be understood that the invention is not limited to the disclosed embodiments. On the contrary, it is intended to cover various modifications and equivalent arrangements included within the scope of the appended claims.

## Claims

1. A negative electrode for a rechargeable lithium battery, comprising:
a current collector;
a first negative active material layer disposed on one side of the current collector and including a first negative active material and a linear conductive material; and
a second negative active material layer disposed on one side of the first negative active material layer and including a second negative active material.

2. The negative electrode for a rechargeable lithium battery of claim 1, wherein:
the linear conductive material is carbon nanotubes, carbon fiber, carbon nanofiber, or a combination thereof.

3. The negative electrode for a rechargeable lithium battery of claim 1 or claim 2, wherein:
the second negative active material layer further comprises a dot-type conductive material.

4. The negative electrode for a rechargeable lithium battery of claim 3, wherein:
the dot-type conductive material is carbon black, denka black, ketjen black, acetylene black, crystalline carbon, or a combination thereof.

5. The negative electrode for a rechargeable lithium battery of any one of claims 1 to 4, wherein:
the first negative active material or the second negative active material is a Si-carbon composite, graphite, or a combination thereof.

6. The negative electrode for a rechargeable lithium battery of claim 5, wherein:
the first negative active material or the second negative active material further comprises crystalline carbon.

7. The negative electrode for a rechargeable lithium battery of any one of claims 1 to 6, wherein:
a thickness of the second negative active material layer is about 1 % to about 75 % of the total thickness of the first negative active material layer and the second negative active material layer.

8. A rechargeable lithium battery, comprising:
a negative electrode of any one of claims 1 to 7;
a positive electrode; and
an electrolyte.
